# EUROPÄISCHE PATENTANMELDUNG

(11) **EP 3 281 817 A1**
(43) Veröffentlichungstag der Anmeldung: **14.02.2018**
(21) Anmeldenummer: 16450018.3
(22) Anmeldetag: 08.08.2016
(51) Int. Cl.: B60L 1/00

(54) **ELELTRISCHES RAUPENFAHRZEUG SOWIE DIE VERWENDUNG DES ELEKTRISCHEN RAUPENFAHRZEUGS**

(71) Anmelder: Hartl e-power GmbH, 4310 Mauthausen (AT)
(72) Erfinder: Hartl, Alexander, 4020 Linz (AT); Hartl, Dominik, 4320 Allerheiligen im Mühlkreis (AT)
(74) Vertreter: Keschmann, Marc

(57) **Zusammenfassung**

Bei einem Raupenfahrzeug (1) umfassend ein Raupenfahrwerk (2), einen aufladbaren elektrischen Energiespeicher (12), einen vom elektrischen Energiespeicher (12) gespeisten elektrischen Antrieb für das Raupenfahrwerk (2) und eine Transportplattform (5), wirkt der elektrische Energiespeicher (12) mit einer Ladeschaltung zusammen, um von einem Stromerzeugungsaggregat (14) aufgeladen zu werden, und weist eine Leistungselektronikschaltung (13) mit wenigstens einem Dreiphasenwechselstrom-Anschluss für externe Verbraucher auf, wobei die Transportplattform (5) ausgebildet ist, um das Stromerzeugungsaggregat (14) aufzunehmen

## Beschreibung

Raupenfahrzeuge werden auf Baustellen für verschiedene Arbeitsvorgänge eingesetzt. Auf Grund ihres Raupenfahrwerks bieten Raupenfahrzeuge eine hohe Geländegängigkeit und Spurhaltigkeit. Raupenfahrzeuge sind meist mit einem für einen spezifischen Einsatzzweck erforderlichen Werkzeug ausgestattet, wie z.B. mit einer Baggerschaufel, einem Ladekranausleger oder einem Abbruchhammer. Es sind auch Raupenfahrzeuge bekannt, die mit einem Befestigungsflansch zum auswechselbaren Anbau verschiedener Anbaugeräte ausgestattet sind, sodass solche Raupenfahrzeuge vielseitig einsetzbar sind. Raupenfahrzeuge bieten zudem den Vorteil, dass diese zumeist selbstfahrend ausgebildet sind, rädermobile Arbeitsgeräte ohne eigene Antriebseinheit hingegen immer ein entsprechendes Zugfahrzeug benötigen, um einen Ortswechsel durchzuführen.

Der Antrieb für das Raupenfahrwerk sowie für das integrierte Werkzeug bzw. das Anbaugerät kann von einem Verbrennungsmotor, einem Hydraulikmotor oder einem Elektromotor gebildet sein.

Auf Baustellen wird meist eine Vielzahl unterschiedlicher Arbeitsgeräte und Arbeitsfahrzeuge benötigt, wobei diese Geräte bzw. Fahrzeuge selten alle zur gleichen Zeit eingesetzt werden, jedoch bei Bedarf jeweils in kurzer Zeit einsatzbereit sein müssen. Daraus resultiert arbeitsablaufbedingt ein ungünstiges Verhältnis zwischen Liegezeit und tatsächlicher Einsatzzeit der einzelnen Geräte. Die Arbeitsgeräte sind über einen langen Zeitraum auf der Baustelle gebunden, werden jedoch nur während einer verhältnismäßig kurzen Zeit verwendet. Aus wirtschaftlicher Sicht bedeutet dies, dass für den Betrieb einer Baustelle im Verhältnis zur tatsächlichen Arbeitsleistung ein hoher Kapitaleinsatz erforderlich ist. Dazu kommt, dass die meisten Arbeitsgeräte auf Arbeitsfahrzeugen fix montiert sind, weil sie zur Baustelle transportiert werden müssen oder innerhalb der Baustelle zum jeweiligen Einsatzort verfahren werden müssen, die jeweiligen Arbeiten werden aber meist stationär durchgeführt. Der die Mobilität ermöglichende Investitionsanteil bei solchen Arbeitsgeräten ist im Verhältnis zu den Kosten für das Arbeitsgerät selbst relativ hoch.

Für die Stromversorgung auf Baustellen werden meist mobile oder stationäre Stromerzeugungsaggregate, insbesondere Dieselaggregate eingesetzt. Die Stromerzeugungsaggregate müssen dabei auf die höchste zu erwartende Stromaufnahme der jeweiligen Verbraucher dimensioniert werden, wobei die Maximalleistung der Aggregate meist nur kurzzeitig benötigt wird. Ein weiteres Problem bei Stromerzeugungsaggregaten liegt darin, dass diese in Abhängigkeit von der Leistungsaufnahme des Verbrauchers geregelt werden, wobei eine wirtschaftlich effiziente Arbeitsweise lediglich in einem niedrigeren oder mittleren Leistungsbereich gewährleistet ist. Im hohen Leistungsbereich weisen Stromerzeugungsaggregate meist ein ungünstiges Verhältnis von Kraftstoffverbrauch zu elektrischer Leistungsabgabe auf. Stromerzeugungsaggregate sind in der Regel mehrere Tonnen schwer und verursachen daher einen hohen Transportaufwand, verbunden mit entsprechenden Kosten. Es sind zwar Stromerzeugungsaggregate bekannt geworden, die, auf Fahrzeugen montiert, verfahrbar (jedoch nicht selbstfahrend) sind, aber auch dies verursacht hohe Kosten und eine unnötig hohe Kapitalbindung, weil die durch das Fahrzeug ermöglichte Mobilität während des stationären Betriebs bei der Stromversorgung von Verbrauchern auf der Baustelle nicht benötigt wird.

Die vorliegende Erfindung zielt daher darauf ab, ein Fahrzeug zu schaffen, das bei geringen Investitionskosten auf einer Baustelle vielseitig einsetzbar ist und gleichzeitig eine elektrische Energieversorgung für verschiedene Arbeitsgeräte zur Verfügung stellen kann.

Zur Lösung dieser Aufgabe sieht die Erfindung ein Raupenfahrzeug vor, umfassend ein Raupenfahrwerk, einen aufladbaren elektrischen Energiespeicher, einen vom elektrischen Energiespeicher gespeisten elektrischen Antrieb für das Raupenfahrwerk und eine Transportplattform, wobei der elektrische Energiespeicher mit einer Ladeschaltung zusammenwirkt, um von einem Stromerzeugungsaggregat aufgeladen zu werden, und eine Leistungselektronikschaltung mit wenigstens einem Dreiphasenwechselstrom-Anschluss für externe Verbraucher aufweist, und wobei die Transportplattform ausgebildet ist, um das Stromerzeugungsaggregat aufzunehmen.

Mit der Erfindung wird somit eine mobile Stromquelle auf Akkumulatorbasis geschaffen, die auf einer Baustelle vielseitig einsetzbar ist. Der elektrische Energiespeicher, der vorzugsweise als Akkumulator ausgebildet ist, dient dabei sowohl der Versorgung des eigenen Fahrantriebs als auch der Stromversorgung von externen Arbeitsgeräten, welche an den wenigstens einen Dreiphasenwechselstrom-Anschluss anschließbar sind. Um eine unterbrechungsfreie Stromversorgung über eine lange Zeitdauer zu gewährleisten, umfasst das Raupenfahrzeug eine Transportplattform für ein Stromerzeugungsaggregat, welches den elektrischen Energiespeicher speist und auflädt. Dadurch, dass eine solche hybride Energieversorgung zur Verfügung steht, bei welcher das Stromerzeugungsaggregat den elektrischen Energiespeicher auflädt und der Energiespeicher externe Verbraucher speist, können Leistungsaufnahmespitzen des Verbrauchers vom Energiespeicher bewältigt werden, ohne dass das Stromerzeugungsaggregat hinaufgeregelt werden muss. Das Stromerzeugungsaggregat kann vielmehr auf einer konstanten, auf die mittlere zu erwartende Leistungsaufnahme abgestimmten Leistung in einem energetisch günstigen Leistungsbereich betrieben werden, wodurch die Treibstoffkosten reduziert werden können. Weiters kann das Stromerzeugungsaggregat zwischenzeitlich auch abgeschaltet werden, was beispielsweise bei Reparatur- oder Wartungsarbeiten oder zur Vermeidung von Geräuschemissionen in bewohntem Gebiet der Fall sein kann. Hierdurch wird die Stromversorgung des externen Verbrauchers aber nicht unterbrochen, weil der elektrische Energiespeicher die Energieversorgung sicherstellt.

Das Stromerzeugungsaggregat ist hierbei mit Hilfe von lösbaren Befestigungsmitteln lösbar auf der Transportplattform befestigt, sodass das Stromerzeugungsaggregat am jeweiligen Einsatzort abgesetzt werden kann, nachdem es mit dem Raupenfahrzeug dorthin verbracht wurde. Die Energieversorgung von externen Arbeitsgeräten kann dann in herkömmlicher Weise direkt von dem abgesetzten Stromerzeugungsaggregat übernommen werden und das Raupenfahrzeug wird dadurch für andere Transportaufgaben frei, sodass die Stillstandszeit des Fahrzeugs minimiert werden kann. Weiters kann das Raupenfahrzeug mit Rücksicht auf seinen integrierten elektrischen Energiespeicher temporär auch für die Energieversorgung von anderen Arbeitsgeräten verwendet werden.

Das Stromerzeugungsaggregat ist, wie an sich bekannt, bevorzugt als Dieselaggregat ausgebildet. Bevorzugt kommt ein Stromerzeugungsaggregat mit einer Leistung von mindestens 80kVA, insbesondere wenigstens 150kVA zum Einsatz. Solche Stromerzeugungsaggregate werden üblicherweise zur Versorgung von Großgeräten, wie z.B. Gesteinsbrecher, Siebanlagen, Fördereinrichtung und dgl., auf Baustellen verwendet.

Um sicherzustellen, dass die Transportplattform des Raupenfahrzeugs für die Aufnahme der oben erwähnten Aggregate ausreichend dimensioniert ist, sieht eine bevorzugte Ausbildung vor, dass die Transportplattform sich über wenigstens die Hälfte, vorzugsweise über die gesamte Längserstreckung des Raupenfahrwerks erstreckt. Die Länge der Transportplattform beträgt vorzugsweise mindestens 3,5m, insbesondere mindestens 4m. Die Breite beträgt vorzugsweise mindestens 1m, insbesondere wenigsten 1,5m.

Weitere Einsatzmöglichkeiten des erfindungsgemäßen Raupenfahrzeugs werden bei einer bevorzugten Weiterbildung dadurch geschaffen, dass eine Aufnahmevorrichtung für Anhänger und/oder eine Hebe- und Rangiervorrichtung für Abrollcontainer vorgesehen ist. Die Aufnahmevorrichtung für Anhänger erlaubt eine Nutzung des Raupenfahrzeugs als Zugfahrzeug für den Transport von fahrbaren, aber über keinen eigenen Anrieb verfügenden Arbeitsgeräten. Die gegenständliche Erfindung ermöglicht es dadurch(räder-) mobile Arbeitsgeräte ohne eigenen Antrieb, in selbstfahrende Arbeitsgeräte umzuwandeln. Die Hebe- und Rangiervorrichtung erlaubt es, einen handelsüblichen Abrollcontainer einseitig anzuheben, um das Raupenfahrzeug den Container im gekippten, auf seinen Rollen aufliegenden Zustand hinter sich herzuziehen und an den jeweils gewünschten Ort zu verbringen.

Bevorzugt ist weiters vorgesehen, dass das Raupenfahrzeug einen Ladekran trägt. Der Ladekran kann dazu verwendet werden, das Stromerzeugungsaggregat auf die Transportplattform des Raupenfahrzeugs zu heben und von dieser wieder abzusetzen. Der Ladekran kann aber auch andere Lasten, wie z.B. mobile oder nicht mobile Arbeitsgeräte, auf die Transportplattform heben, um diese umzustellen oder zu transportieren. Auf diese Weise können beispielsweise auch kleine fahrbare Arbeitsgeräte, wie z.B. kleine Raupenbagger, die mit ihrem eigenen Fahrantrieb keine größeren Strecken überwinden können, innerhalb großräumiger Baustellen hin- und hertransportiert werden.

Das Vorsehen eines Ladekrans bietet den Vorteil, dass dadurch ein LKW-Ladekran ersetzt werden kann, sodass auf das Bereitstellen eines eigenen LKW verzichtet werden kann.

Der Ladekran ist bevorzugt als Kranausleger mit wenigstens zwei schwenkbaren Auslegerarmen ausgebildet. Weiters kann wenigstens einer der Auslegearme teleskopierbar ausgebildet sein.

Die Hebe- und Rangiervorrichtung für Abrollcontainer und/oder der Ladekran werden für ihren Antrieb bevorzugt vom elektrischen Energiespeicher des Raupenfahrzeugs mit elektrischer Energie versorgt.

Der elektrische Antrieb des Raupenfahrwerks ist bevorzugt für das Vor- und Rückwärtsfahren ausgebildet. Eine bevorzugte Ausbildung sieht weiters vor, dass die Laufwerksketten des Raupenfahrwerks in seitlicher Richtung teleskopierbar ausgebildet sind. Dadurch kann die Spurweite an die jeweiligen Bedürfnissen angepasst werden.

Um die Stabilität zu erhöhen sowie die Kippneigung des Raupenfahrzeugs im stationären Zustand zu reduzieren, ist bevorzugt vorgesehen, dass seitlich außerhalb der Laufwerksketten des Raupenfahrwerks ausfahrbare Stützfüße vorgesehen sind. Die Stützfüße können dabei seitlich verlagert werden und in der seitlich nach außen verlagerten Position gegen den Boden ausgefahren werden, wodurch das Fahrzeug angehoben wird.

Im Hinblick auf das Aufladen des elektrischen Energiespeichers ist bevorzugt vorgesehen, dass die Ladeschaltung ausgebildet ist, um den elektrischen Energiespeicher wahlweise vom Stromerzeugungsaggregat oder von Netzstrom aufzuladen. Die Ladeschaltung sorgt hierbei dafür, dass der Ladestrom im optimalen Bereich gehalten wird. Dadurch kann einerseits verhindert werden, dass der Energiespeicher durch zu hohen Ladestrom Schaden nimmt, andererseits, dass der Energiespeicher tiefentladen und dadurch die Akkumulatorzellen zerstört werden. Die Ladeschaltung erlaubt einen Netzmodus, bei dem der elektrische Energiespeicher mit Netzstrom aufgeladen wird, als auch einen Generatormodus, bei dem das Aufladen mit dem angeschlossenen Stromerzeugungsaggregat erfolgt.

Die Leistungselektronikschaltung des Raupenfahrzeugs sorgt für eine Wandlung des von dem elektrischen Energiespeicher zur Verfügung gestellten Gleichstroms in Wechselstrom, insbesondere Dreiphasenwechselstrom. Der Anschluss von externen elektrischen Verbrauchern erfolgt bevorzugt über am Fahrzeug angebrachte Steckdosen, insbesondere solche für die Abnahme von 230V bei 50Hz und von 400V bei 50Hz und 16+32A. Für Verbraucher mit höherer Leistungsaufnahme kann auch eine Klemmleiste für fünf Phasen vorgesehen sein.

Das Raupenfahrzeug umfasst vorzugsweise eine fernsteuerbare Steuereinrichtung, welche den elektrischen Antrieb, ggf. einen Kranantrieb, ggf. den Antrieb der Hebe- und Rangiervorrichtung für Abrollcontainer, ggf. den Antrieb der ausfahrbaren Stützfüße und ggf. den Antrieb für das Teleskopieren der Laufwerksketten steuert. Über die Fernsteuerung kann somit eine vorzugsweise drahtlose Steuerung der wichtigsten Funktionen des Fahrzeugs erfolgen, wobei das Fahrzeug zu diesem Zweck ein Datenübertragungsmodul für die drahtlose Datenübertragung aufweist, und eine Fernbedienung vorgesehen ist, welche ebenfalls über ein Datenübertragungsmodul für die drahtlose Datenübertragung verfügt. Mit der Fernsteuerung kann gemäß einer bevorzugten Ausführung der Fahrantrieb des Raupenfahrwerks in zwei Fahrrichtung (vorwärts/rückwärts), die Verstellung der Spurweite des Raupenfahrwerks, das Anheben und Absenken der Hebe- und Rangiervorrichtung für Abrollcontainer, das Aus- und Einfahren der Stützfüße gesteuert werden. Die Fernsteuerung des ggf. vorgesehen Krans kann auch mit Hilfe einer eigenen Fernsteuerung vorgenommen werden.

Mit Rücksicht auf die Fernsteuerbarkeit kann das Raupenfahrzeug bevorzugt fahrstands- bzw. fahrerhauslos ausgebildet sein.

Das erfindungsgemäße Raupenfahrzeug erlaubt neuartige, effizienzsteigernde Arbeitsabläufe auf der Baustelle, insbesondere einer Baustelle, auf der stückiges Material aufbereitet, insbesondere verkleinert, klassiert und/oder sortiert wird. Die vom Fahrzeug bzw. von dessen elektrischen Energiespeicher oder vom Stromerzeugungsaggregat direkt versorgten Arbeitsgeräte umfassen daher z.B. Gesteinsbrecher, Klassier- und Sortiervorrichtungen sowie Förderbänder, sowie generell elektrisch betriebene Arbeitsgeräte.

Die Erfindung betrifft daher auch die Verwendung eines erfindungsgemäßen Raupenfahrzeugs zum Transportieren eines Stromerzeugungsaggregats zu einem Verbraucher, insbesondere einem Arbeitsgerät. Beim Verbraucher kann das Stromerzeugungsaggregat mit Hilfe des Ladekrans beim Arbeitsgerät abgesetzt und das Stromerzeugungsaggregat zur Stromversorgung des Arbeitsgeräts eingesetzt werden. Alternativ kann das Stromerzeugungsaggregat auf der Transportplattform des Fahrzeugs verbleiben und versorgt den elektrischen Energiespeicher mit elektrischer Energie, der seinerseits das Arbeitsgerät mit elektrischer Energie versorgt.

Weiters kann so vorgegangen werden, dass die Aufnahmevorrichtung für Anhänger und/oder die Hebe- und Rangiervorrichtung für Abrollcontainer nach dem Absetzen des Stromerzeugungsaggregats verwendet wird, um einen Abrollcontainer oder ein Arbeitsgerät zu transportieren.

Weiters kann ein Arbeitsgerät nach dem Absetzen des Stromerzeugungsaggregats mit Hilfe des Ladekrans auf die Transportplattform gehoben und transportiert werden.

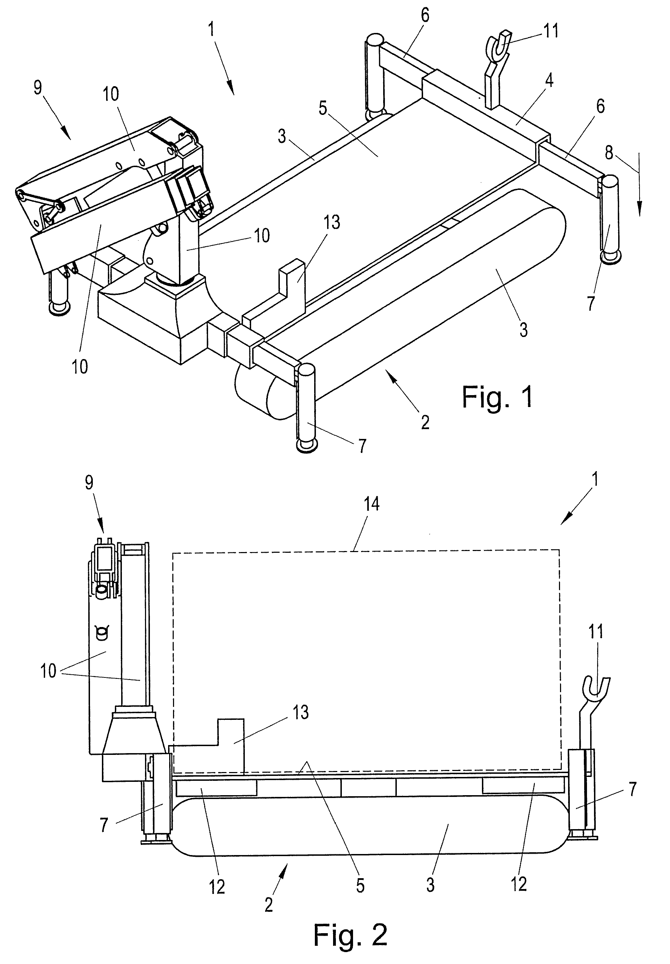

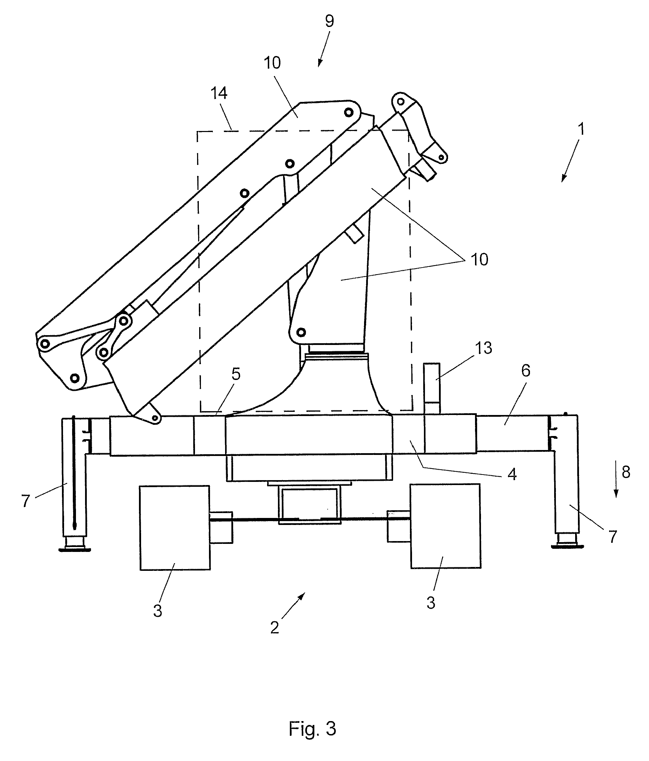

Die Erfindung wird nachfolgend anhand eines in der Zeichnung schematisch dargestellten Ausführungsbeispiels näher erläutert. In dieser zeigen Fig. 1 eine perspektivische Ansicht des Raupenfahrzeugs, Fig. 2 eine Seitenansicht des Raupenfahrzeugs gemäß Fig. 1 und Fig. 3 eine Vorderansicht des Raupenfahrzeugs gemäß Fig. 1.

In den Figuren ist ein Raupenfahrzeug 1 mit einem Raupenfahrwerk 2 gezeigt, wobei das Raupenfahrwerk 2 zwei parallele Laufwerksketten 3 umfasst. Ein nicht näher dargestellter Elektromotor sorgt für den Antrieb der Laufwerksketten 3. Das Raupenfahrwerk 2 trägt einen starren Rahmen 4, welcher eine sich im Wesentlichen über die gesamte Länge des Raupenfahrzeugs 1 erstreckende Transportplattform 5 aufweist. Der Rahmen 4 ist an der Vorder- und der Rückseite des Fahrzeugs 2 mit seitlich ausfahrbaren Rahmenteilen 6 versehen, an deren freien Enden jeweils Stützfüße 7 angeordnet sind, die in Richtung des Pfeils 8 gegen den Boden ausfahrbar sind.

Am Rahmen 4 ist weiters ein Kranaufbau angeordnet, der einen Kranausleger 9 mit drei relativ zueinander schwenkbar gelagerten Auslegerarmen 10 umfasst. Weiters trägt der Rahmen 4 eine Hebevorrichtung 11 für Abrollcontainer.

Zur Versorgung des elektrischen Antriebs des Raupenfahrwerks 2 umfasst das Fahrzeug 1 zwei Akkumulatorpakete 12 (Fig. 2). Die Akkumulatorpakete 12 speisen eine Leistungselektronikschaltung 13 mit wenigstens einem Dreiphasenwechselstrom-Anschluss für externe Verbraucher.

Die Transportplattform 5 ist derart ausgebildet, dass sie ein schematisch angedeutetes Stromerzeugungsaggregat 14 tragen kann. Das Stromerzeugungsaggregat 14 ist beispielsweise als Dieselaggregat ausgebildet und hat geeignete Tragehaken oder dgl., um vom Ladekran 9 ergriffen und auf die Transportplattform 5 aufgehoben oder von dieser abgesetzt zu werden. Das Stromerzeugungsaggregat 14 weist nicht näher dargestellte Anschlüsse auf, über welche das Stromerzeugungsaggregat 14 an eine Ladeelektronik der Akkumulatorpakete 12 angeschlossen werden kann, um diese aufzuladen.

## Patentansprüche

1. Raupenfahrzeug umfassend ein Raupenfahrwerk (2), einen aufladbaren elektrischen Energiespeicher (12), einen vom elektrischen Energiespeicher (12) gespeisten elektrischen Antrieb für das Raupenfahrwerk (2) und eine Transportplattform (5), wobei der elektrische Energiespeicher (12) mit einer Ladeschaltung zusammenwirkt, um von einem Stromerzeugungsaggregat (14) aufgeladen zu werden, und eine Leistungselektronikschaltung (13) mit wenigstens einem Dreiphasenwechselstrom-Anschluss für externe Verbraucher aufweist, und wobei die Transportplattform (5) ausgebildet ist, um das Stromerzeugungsaggregat (14) aufzunehmen.

2. Raupenfahrzeug nach Anspruch 1, **dadurch gekennzeichnet, dass** eine Aufnahmevorrichtung für Anhänger und/oder eine Hebe- und Rangiervorrichtung (11) für Abrollcontainer vorgesehen ist.

3. Raupenfahrzeug nach Anspruch 1 oder 2, **dadurch gekennzeichnet, dass** das Raupenfahrzeug (1) einen Ladekran (9) trägt.

4. Raupenfahrzeug nach Anspruch 1, 2 oder 3, **dadurch gekennzeichnet, dass** die Laufwerksketten (3) des Raupenfahrwerks (2) in seitlicher Richtung teleskopierbar ausgebildet sind.

5. Raupenfahrzeug nach einem der Ansprüche 1 bis 4, **dadurch gekennzeichnet, dass** seitlich außerhalb der Laufwerksketten (3) des Raupenfahrwerks (2) ausfahrbare Stützfüße (7) vorgesehen sind.

6. Raupenfahrzeug nach einem der Ansprüche 1 bis 5, **dadurch gekennzeichnet, dass** die Ladeschaltung ausgebildet ist, um den elektrischen Energiespeicher (12) wahlweise vom Stromerzeugungsaggregat (14) oder von Netzstrom aufzuladen.

7. Raupenfahrzeug nach einem der Ansprüche 1 bis 6, **dadurch gekennzeichnet, dass** die Transportplattform (5) sich über wenigstens die Hälfte, vorzugsweise über die gesamte Längserstreckung des Raupenfahrwerks (2) erstreckt.

8. Raupenfahrzeug nach einem der Ansprüche 1 bis 7, **dadurch gekennzeichnet, dass** das Raupenfahrzeug (1) eine fernsteuerbare Steuereinrichtung umfasst, welche den elektrischen Antrieb, ggf. einen Kranantrieb, ggf. die Aufnahmevorrichtung für Anhänger und ggf. die Hebe- und Rangiervorrichtung (11) für Abrollcontainer steuert.

9. Raupenfahrzeug nach Anspruch 8, **dadurch gekennzeichnet, dass** das Raupenfahrzeug (1) fahrstands- bzw. fahrerhauslos ausgebildet ist.

10. Verwendung eines Raupenfahrzeugs nach einem der Ansprüche 1 bis 9, zum Transportieren eines Stromerzeugungsaggregats (14) zu einem Verbraucher, insbesondere einem Arbeitsgerät.

11. Verwendung nach Anspruch 10, **dadurch gekennzeichnet, dass** das Stromerzeugungsaggregat (14) mit Hilfe des Ladekrans (9) beim Arbeitsgerät abgesetzt wird und das Stromerzeugungsaggregat (14) zur Stromversorgung des Arbeitsgeräts eingesetzt wird.

12. Verwendung nach Anspruch 10, **dadurch gekennzeichnet, dass** das Stromerzeugungsaggregat (14) den elektrischen Energiespeicher (12) und der elektrische Energiespeicher (12) das Arbeitsgerät mit elektrischer Energie versorgt.

13. Verwendung nach Anspruch 10 oder 11, **dadurch gekennzeichnet, dass** die Aufnahmevorrichtung für Anhänger und/oder die Hebe- und Rangiervorrichtung (11) für Abrollcontainer (14) verwendet wird, um einen Abrollcontainer oder ein Arbeitsgerät zu transportieren.

14. Verwendung nach Anspruch 10 oder 11, **dadurch gekennzeichnet, dass** ein Arbeitsgerät nach dem Absetzen des Stromerzeugungsaggregats (14) mit Hilfe des Ladekrans (9) auf die Transportplattform (5) gehoben und transportiert wird.
